# EUROPEAN PATENT SPECIFICATION

(11) **EP 3 717 992 B1**
(45) Date of publication and mention of the grant of the patent: **19.03.2025**
(21) Application number: 19743228.9
(22) Date of filing: 23.01.2019
(51) Int. Cl.: G06F 21/36, G06F 3/04815, G06F 3/04847, G06V 20/20, G06F 1/16, G06F 3/01, G06F 3/0482, G06F 3/0488

(54) **DEVICE FOR PROVIDING AUGMENTED REALITY SERVICE, AND METHOD OF OPERATING THE SAME**
VORRICHTUNG ZUR BEREITSTELLUNG EINES DIENSTES FÜR ERWEITERTE REALITÄT UND VERFAHREN ZUM BETRIEB DAVON
DISPOSITIF DE FOURNITURE DE SERVICE DE RÉALITÉ AUGMENTÉE ET SON PROCÉDÉ DE FONCTIONNEMENT

(30) Priority: 23.01.2018 KR 20180008413
(43) Date of publication of application: 07.10.2020
(73) Proprietor: Samsung Electronics Co., Ltd., Gyeonggi-do 16677 (KR)
(72) Inventor: SHIN, Soyoung, Suwon-Si, Gyeonggi-do 16677 (KR); KOH, Nayoung, Suwon-Si, Gyeonggi-do 16677 (KR); LEE, Yukyoung, Suwon-Si, Gyeonggi-do 16677 (KR)
(74) Representative: Appleyard Lees IP LLP
(86) International application number: PCT/KR2019/000979
(87) International publication number: WO 2019/147021

(56) References cited:
- EP-A1- 2 887 253
- EP-A1- 2 887 253
- US-A1- 2014 168 056
- US-A1- 2014 168 056
- US-A1- 2017 255 256
- US-A1- 2017 308 272
- US-A1- 2017 318 019
- US-B1- 9 871 774

## Description

### Technical Field

The disclosure relates to a device for providing an augmented reality (AR) service, a method of operating the device for providing an AR service, and a recording medium having recorded thereon a program for executing the method of operating the device for providing an AR service.

### Background Art

Augmented reality refers to a technological field which provides a new paradigm that can be utilized in interaction and communication between human beings and computers. Augmented reality is a type of virtual reality through which the real world seen by the eyes of a user is mixed with a virtual world having additional information and displayed as one image.

Augmented reality, which is a concept in which the real word is complemented by a virtual world, uses a virtual environment created with computer graphics, but is based on a real environment. The computer graphics additionally provide information that is necessary for the real environment. In other words, a three-dimensional (3D) virtual image overlaps a real image seen by a user such that the distinction between a real environment and a virtual environment is blurred.

As for devices that implement an augmented reality service, recently there has been demand for research into user interfaces which match a real image with a virtual image. Documents EP 2 887 253 A1 and US 2017/318019 A1 both disclose user authentication using virtual reality.

### Disclosure of Invention

### Solution to Problem

In accordance with an example aspect of the disclosure, a device for providing an AR service includes a camera; and a processor configured to control the camera obtain a surrounding image of surroundings of the device, to recognize a plurality of objects observed sequentially by eyes of a user wearing the device, the plurality of objects being included in the surrounding image, and to perform a preset task corresponding to the plurality of objects and an order in which the plurality of objects are observed.

### Brief Description of Drawings

The above and other aspects, features, and advantages of certain embodiments of the present disclosure will be more apparent from the following description, taken in conjunction with the accompanying drawings, in which:
FIG. 1 is a diagram illustrating an example of a method of operating a device, according to an embodiment;
FIGS. 2 and 3 are diagrams illustrating an example embodiment of a device;
FIGS. 4 and 5 are block diagrams illustrating an example device according to an embodiment;
FIG. 6 is a flowchart illustrating an example method of operating a device, according to an embodiment;
FIG. 7 is a flowchart illustrating an example of displaying of a virtual image, according to an embodiment;
FIG. 8 is a diagram illustrating an example of detection of an object from an image of surroundings, according to an embodiment;
FIGS. 9, 10 and 11 are diagrams illustrating an example of performing a preset task corresponding to an object that a user observes according to an embodiment;
FIG. 12 is a flowchart illustrating an example of performing a task corresponding to a hand gesture of a user according to an embodiment;
FIGS. 13 and 14 are diagrams illustrating an example of performing a task corresponding to a hand gesture of a user according to an embodiment;
FIG. 15 is a flowchart illustrating an example of setting a password using an object according to an embodiment;
FIGS. 16, 17A, 17B and 18 are diagrams illustrating an example of setting a password using an object according to an embodiment;
FIGS. 19A and 19B are diagrams illustrating an example of setting a password using a hand gesture of a user according to an embodiment;
FIG. 20 is a flowchart illustrating an example method of operating a device, according to another embodiment;
FIGS. 21 and 22 are diagrams illustrating example recognition of an object corresponding to a user input, according to another embodiment;
FIG. 23 is a diagram illustrating an example of performing a preset task based on recognition of a certain person, according to an embodiment; and
FIG. 24 is a diagram illustrating an example of performing a preset task based on contrast of an object, according to an embodiment.

### Best Mode for Carrying out the Invention

Example embodiments of the present disclosure provide a device for providing an augmented reality (AR) service, and a method of operating the device.

Additional aspects will be set forth in part in the description which follows and, in part, will be apparent from the description.

In accordance with an example aspect of the disclosure, a device for providing an AR service includes a camera; and a processor configured to control the camera obtain a surrounding image of surroundings of the device, to recognize a plurality of objects observed sequentially by eyes of a user wearing the device, the plurality of objects being included in the surrounding image, and to perform a preset task corresponding to the plurality of objects and an order in which the plurality of objects are observed.

In accordance with another example aspect of the disclosure, a method of operating a device for providing an AR service includes obtaining a surrounding image of surroundings of the device via a camera; recognizing a plurality of objects observed sequentially by eyes of a user wearing the device , the plurality of objects being included in the surrounding image,; and performing a preset task corresponding to the plurality of objects and an order in which the plurality of objects are observed.

In accordance with another example aspect of the disclosure, a non-transitory computer-readable recording medium has recorded thereon a computer program, which, when executed by a computer, performs the above-described method.

### Mode for the Invention

Various example embodiments of the disclosure are described in greater detail herein with reference to the accompanying drawings. The disclosure may, however, be embodied in many different forms and should not be understood as being limited to the examples set forth herein. In the drawings, parts irrelevant to the description may be omitted for simplicity of explanation, and like reference numerals refer to like elements throughout.

Although general terms widely used at present were selected for describing the disclosure in consideration of the functions thereof, these general terms may vary according to intentions of one of ordinary skill in the art, case precedents, the advent of new technologies, and the like. Hence, the terms may be defined based on their meanings and the contents of the entire disclosure, not by simply stating the terms.

While such terms as "first," "second," etc., may be used to describe various components, such components must not be limited to the above terms. The above terms are used simply to distinguish one component from another.

The terms used in the present disclosure are merely used to describe example embodiments, and are not intended to limit the scope of the disclosure. An expression used in the singular encompasses the expression of the plural, unless it has a clearly different meaning in context. Throughout the disclosure, when an element is referred to as being "connected" or "coupled" to another element, it can be directly connected or coupled to the other element, or can be connected or coupled to the other element with intervening elements interposed therebetween. In addition, the terms "comprises" and/ or "comprising" or "includes" and/or "including" when used in this disclosure, specify the presence of stated elements, but do not preclude the presence or addition of one or more other elements.

The use of the terms "a" and "an" and "the" and similar referents in the context of describing the disclosure (especially in the context of the following claims) are to be construed to cover both the singular and the plural. Also, the steps of all methods described herein can be performed in any suitable order unless otherwise indicated herein or otherwise clearly indicated by context. Example embodiments of the disclosure are not limited to the described order of the operations.

Thus, the expression "according to an embodiment" used in the disclosure does not necessarily indicate the same embodiment.

Example embodiments of the disclosure may be described in terms of functional block components and various processing steps. Some or all of such functional blocks may be realized by any number of hardware and/or software components configured to perform the specified functions. For example, functional blocks according to the disclosure may be realized by one or more microprocessors or by circuit components for a predetermined function. In addition, for example, functional blocks according to the disclosure may be implemented with any programming or scripting language. The functional blocks may be implemented in algorithms that are executed on one or more processors. Furthermore, the disclosure described herein could employ any number of conventional techniques for electronics configuration, signal processing and/or control, data processing and the like. The words "mechanism," "element," "means," and "configuration" are used broadly and are not limited to mechanical or physical embodiments,

Furthermore, the connecting lines or connectors between components shown in the various figures presented are intended to represent example functional relationships and/or physical or logical couplings between the components. Connections between components may be represented by many alternative or additional functional relationships, physical connections or logical connections in a practical device.

The disclosure will now be described in greater detail with reference to the accompanying drawings, in which various example embodiments are shown.

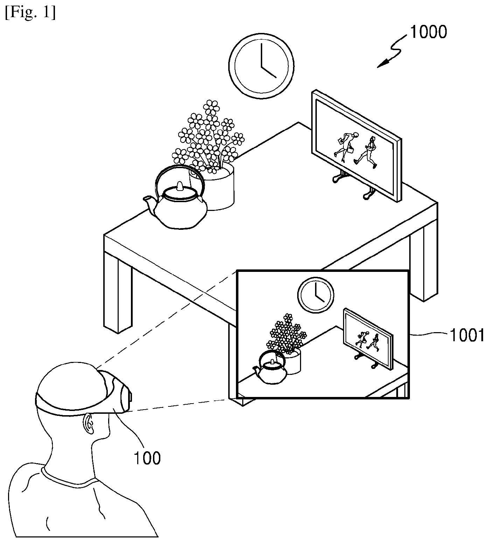

FIG. 1 is a diagram illustrating an example of a method of operating a device, according to an embodiment.

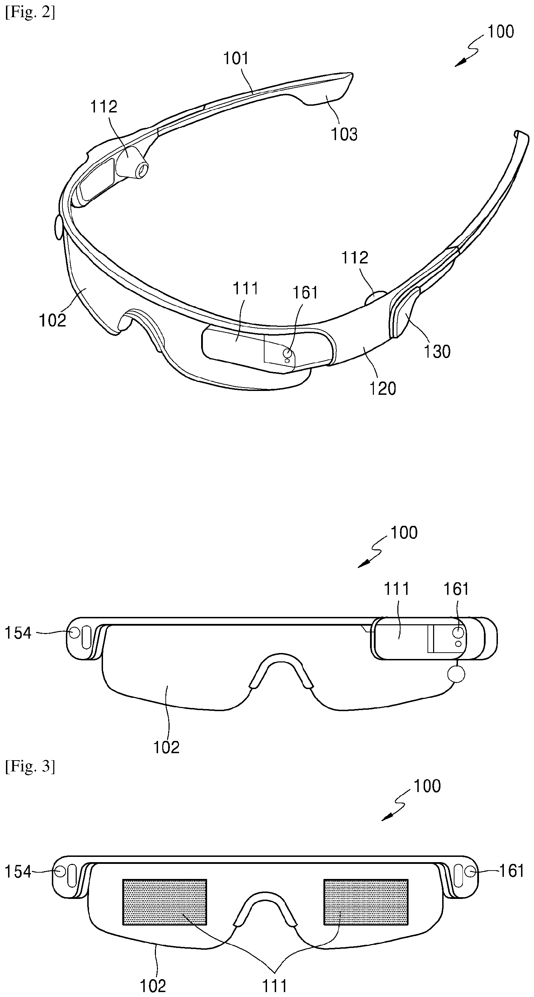

A device 100 (see FIGS. 2 through 5) according to an example embodiment may be implemented using, for example, and without limitation, a head mounted display (HMD).

An HMD may be mounted on the head of a user and may display an image right in front of the eyes of the user. The HMD according to an embodiment may be realized in various types. For example, the HMD may have, the form of, for example, and without limitation, at least one selected from goggles, eyeglasses, a helmet, a visor, or the like, but is not limited thereto.

According to an embodiment, the device 100 of FIGS. 2, 3, 4 and 5 (hereinafter, referred to as the device 100 or the HMD 100) may provide an augmented reality (AR) image. AR may refer, for example, to a technology displaying a three-dimensional (3D) virtual image realized via computer graphics and overlaid on a real space seen by the eyes of a user.

Referring to FIG. 1, a user may view a real surrounding space within the field of view of the user while wearing the HMD 100 on his or her head. For example, an image 1001 recognized by the HMD 100 may be a scene 1000 of an actual surrounding space in the field of view of the user wearing the HMD 100.

According to an embodiment, when the user currently wearing the HMD 100 looks at a certain object existing in the actual surrounding space in the field of view of the user, the HMD 100 may perform a pre-set task in correspondence with the certain object. The HMD 100 may, for example, pre-set an object existing in an actual space as a password in correspondence with a task that needs a password, and thus may perform the task with only a user's action of looking at the object set with the password.

For example, when a clock hung in a room of a user is set as a password to execute a movie playback application, the movie playback application may be executed via a user's action of looking at the clock.

For example, when a picture frame and a sofa existing in a living room of a user are set as passwords to execute a game application, the game application may be executed via a user's action of sequentially looking at the picture frame and the sofa.

FIG. 1 is a diagram illustrating an example embodiment, and thus the disclosure is not limited thereto.

FIGS. 2 and 3 are diagrams illustrating an example embodiment of a device according to an example embodiment.

FIGS. 2 and 3 illustrate a case where the HMD 100 is in the form of eyeglasses, but it will be understood that the disclosure is not limited thereto, and that the HMD 100 may be realized by any type of suitable device.

Referring to FIG. 2, the HMD 100 may include a frame 101, a lens 102, a power supply 103, a display 111, an audio output interface (e.g., including audio output circuitry) 112, a processor (e.g., including processing circuitry) 120, a user input interface (e.g., including input interface circuitry) 130, a camera 161, and a depth sensor 154. All of the components illustrated in FIG. 2 are not essential components of the HMD 100. More or less components than those illustrated in FIG. 2 may be included in the HMD 100. According to an embodiment, the HMD 100 may not, for example, include the lens 102.

Some of the components of the HMD 100 may be built in the HMD 100, or the other components may be mounted on the exterior of the HMD 100. For example, the power supply 103 and the processor 120 may be built in the HMD 100. The display 111, the audio output interface 112, the user input interface 130, the camera 161, and the depth sensor 154 may be mounted on the exterior of the HMD 100. The components built in the HMD 100 and the components mounted on the exterior of the HMD 100 are not limited to those described above.

The frame 101 may be formed of a material such as, for example, and without limitation, plastic and/or metal, and may include wiring that connects the components of the HMD 100 to one another.

According to an embodiment, the frame 101 may include a connection member (not shown) and may be constructed such that at least a portion of the frame 101 is bendable. According to an embodiment, the HMD 100 may further include an elastic band such that the HMD 100 may be fixed to the head of the user regardless of the size of the head of the user.

According to an embodiment, the frame 101 may, for example, be constructed such that the lens 102 is detachable from the frame 101.

The lens 102 may be formed of, for example, and without limitation, a transparent material that enables the user to see the actual space via the lens 102. For example, the lens 102 may be formed, for example, and without limitation of glass and/or plastic, such as polycarbonate, but embodiments are not limited thereto.

According to an embodiment, the lens 102 may include, for example, and without limitation, at least one of a light-reflection and antidazzle coating, an antifogging coating, an ultraviolet (UV)-block coating, or the like.

The power supply 103 may supply power necessary for operating the HMD 100, to each component. The power supply 103 may include a battery (not shown) capable of charging, and a cable (not shown) or cable port (not shown) capable of receiving power from an external source.

However, the power supply 103 may be disposed on any of various locations on the frame 101 of the HMD 100. For example, the power supply 103 may be located on an end of the HMD 100.

The display 111 may include, for example, and without limitation, a semi-transparent optical waveguide (for example, a prism). The semi-transparent optical waveguide (for example, a prism) may, for example, reflect light that is output from a projector built in the HMD 100, and focus an image on the foveae of the retinas of the eyes of a user who wears the HMD 100.

The display 111 may, for example, replace the lens 102 or a portion of the lens 102.

For example, in the case of wearable glasses, the lens 102 may be the same as a display region. In this case, while a user is looking at an actual object via the lens 102, a virtual image may be displayed on the lens 102.

Accordingly, when the user wears the HMD 100, such as wearable eyeglasses, the display 111 may display the virtual image within a region thereof corresponding to the viewing angle of the user. The viewing angle of the user may refer, for example, to an angle or range within which the user is able to recognize an object without moving his or her head or pupils when the user is keeping eyes forward. For example, the viewing angle of the user may be, but is not limited to, 45 degrees in each of upward and downward directions and 90 degrees in each of left and right directions.

According to an embodiment, the region of the display 111 corresponding to the viewing angle of the user may be equal to or smaller than the entire area of the display 111. The region of the display 111 corresponding to the viewing angle of the user may, for example, be determined or adjusted based on a distance between the eyes of the user and the lens 102.

According to an embodiment, the display 111 may overlap virtual icons indicating a plurality of objects included in a surrounding image obtained via the camera 161, on the surrounding image such that the virtual icons may be mapped with the plurality objects, and display a result of the overlapping, under the control of the processor 120.

The display 111 may overlap a virtual image representing an object corresponding to the eyes of the user from among the plurality of objects included in the surrounding image, on the surrounding image, and display a result of the overlapping, under the control of the processor 120.

According to an embodiment, as it is sensed that the user has worn the HMD 100, the display 111 may overlap a virtual image related with a password input on the surrounding image and display a result of the overlapping, under the control of the processor 120.

As the surrounding image obtained via the camera 161 corresponds to a pre-stored image, the display 111 may overlap a virtual image related with a password input and display a result of the overlapping, under the control of the processor 120.

Based on a pre-determined user input, the display 111 may overlap a virtual image related with a password input and display a result of the overlapping, under the control of the processor 120.

The audio output interface 112 may include various audio output circuitry, such as, for example, and without limitation, earphones, or the like, that may be mounted on the ears of the user of the HMD 100. In this case, the audio output interface 112 may be fixedly mounted on the HMD 100. For example, the audio output interface 112 may include various audio output circuitry including, for example, and without limitation, a bone conduction speaker, or the like.

The audio output interface 112 may, for example, be detachable from the HMD 100. In this case, the user of the HMD 100 may selectively mount the audio output interface 112 on his or her ears.

The processor 120 may include various processing circuitry and be connected to the HMD 100 via wires or wirelessly and may control each of the components of the HMD 100. For example, the processor 120 may receive data from the camera 161 or the user input interface 130, analyze the received data, and output the analyzed data via at least one selected from the display 111 and the audio output interface 112.

The user input interface 130 may include various user input circuitry and receives a user input. The user input may include, for example, and without limitation, a command, a request, or the like, from a user to the HMD 100 to start or conclude a certain operation.

According to an embodiment, the user input interface 130 may include various user input circuitry, such as, for example, and without limitation, a touch panel for receiving a touch input, or the like. The touch input may refer, for example, to a gesture or the like that a user makes on the touch panel to control the HMD 100. Non-limiting examples of the touch input may include tap, touch & hold, double tap, drag, panning, flick, drag & drop, or the like.

According to an embodiment, the user input interface 130 may include, for example, and without limitation, user input circuitry including a bending sensor for receiving a bending input. The bending input may refer, for example, to an input of a user bending a portion of the HMD 100 or the whole HMD 100 in order to control the HMD 100. According to an embodiment, the HMD 100 may sense, for example, and without limitation, a bending location (coordinate value), a bending direction, a bending angle, a bending speed, the number of times being bent, a point of time when bending occurs, a period of time during which bending is maintained, or the like, using a bending sensor.

According to an embodiment, the user input interface 130 may receive multiple inputs. "Multiple inputs" may refer, for example, to a combination of at least two input methods. For example, and without limitation, the HMD 100 may receive a touch input and a motion input from the user, receive a touch input and a voice input from the user, or the like.

The HMD 100 may receive, for example, and without limitation, a touch input and an eyeball input from the user. The eyeball input may refer, for example, to an input of a user adjusting eye blinking, a staring location, an eyeball movement speed, or the like, in order to control the HMD 100.

According to an embodiment, the HMD 100 may further include a microphone (not shown). The microphone may receive, for example, a voice of the user and sounds of a surrounding environment of the HMD 100.

The camera 161 may, for example, and without limitation, be a camera for use in smartphones, a small camera such as a webcam, or the like. When a user wears the HMD 100, the camera 161 may, for example, be mounted on a location adjacent to an eye of the user to thereby capture an image that is similar to an image recognized via the eyes of the user.

According to an embodiment, the HMD 100 may further include the depth sensor 154. The HMD 100 may recognize a gesture of the user on a 3D space using the depth sensor 154. For example, the depth sensor 154 may measure a depth value or the like of an input instrument (for example, a hand, fingers, or an electronic pen).

According to an embodiment, the depth sensor 154 may obtain the depth value of the input instrument according to various methods. For example, the depth sensor 154 may measure the depth value using, for example, and without limitation, at least one of a time of flight (TOF) method, a stereoscopic vision method, a structured light pattern method, or the like.

The TOF method may refer, for example, to a method of measuring a distance to an object by analyzing a time period during which light is reflected by the object and returns. In an example TOF system, an infrared light-emitting diode (LED) emits infrared pulses, and an infrared camera measures a time period during which light is reflected by an object and returns. In this case, the depth sensor 154 may include an infrared LED and an infrared camera. The depth sensor 154 may photograph distance information in the form of a moving picture by repeating emission and reception of light several times per second. The depth sensor 154 may generate a depth map representing distance information with brightness or a color of each pixel.

The stereoscopic vision method may refer, for example, to a method of photographing a stereoscopic effect of an object using two cameras. In this case, the depth sensor 154 may include two cameras. The depth sensor 154 may calculate (determine) the distance, based on the principle of triangulation, using information about a difference between images respectively viewed by the two cameras. A human being feels a stereoscopic effect via a difference between images respectively entering his or her left eye and right eye, and the depth sensor 154 measures the distance according to a method that is similar to the principle of human eyes. For example, when the distance is short, a difference between images captured by two cameras is big, and, when the distance is long, the difference between images captured by two cameras is small.

In the structured light pattern method, a distance to an object is measured by projecting light having a pattern onto the object and analyzing a location of the pattern on the surface of the object. The depth sensor 154 generally projects a straight-line pattern or a dot pattern onto an object, and the pattern varies according to unevenness of the object.

The structured light pattern method may, for example, be referred to as a structure in which one of two cameras for use in a stereoscopic vision method is replaced by a light projector. For example, the depth sensor 154 may calculate a depth map in real time by analyzing, using an algorithm, a location of a pattern obtained by light emitted by an infrared projector and formed on the surface of an object.

According to an embodiment, the camera 161 and the depth sensor 154 may be independent sensors. According to another embodiment, the camera 161 and the depth sensor 154 may be integrated into a single sensor.

According to an embodiment, the HMD 100 may further include various sensors in addition to the camera 161 and the depth sensor 154.

For example, the HMD 100 may include sensors for sensing a motion input of the user. The motion input may refer, for example, to a motion that the user applies to the HMD 100 in order to control the HMD 100. For example, the motion input may be an input of the user rotating the HMD 100, inclining the HMD 100, or moving the HMD 100 horizontally or vertically. The HMD 100 may sense a motion input that is preset by the user, using, for example, and without limitation, an acceleration sensor, a tilt sensor, a gyro sensor, a 3-axis magnetic sensor, or the like.

The HMD 100 may include a sensor capable of sensing whether the user is wearing the HMD 100. For example, the HMD 100 may include, for example, and without limitation, a temperature sensor, a pressure sensor, an acceleration sensor, a proximity sensor, an iris recognition sensor, or the like.

According to an embodiment, the HMD 100 may determine whether the user is wearing the HMD 100.

According to an embodiment, the HMD 100 may determine whether the user is wearing the HMD 100, using a sensor included in the HMD 100 (for example, and without limitation, at least one of a temperature sensor, a pressure sensor, an illumination sensor, a proximity sensor, an iris recognition sensor, an atmospheric pressure sensor, or the like). For example, when a value measured by a temperature sensor or pressure sensor attached to a nose pad or temple of the HMD 100 implemented using eyeglasses is equal to or greater than a critical value, the HMD 100 may determine that the user is wearing the HMD 100. When the HMD 100 succeeds in recognizing the iris of the user using an iris recognition sensor, the HMD 100 may determine that the user is wearing the HMD 100.

When a tilt value measured by a tilt sensor continuously changes, the HMD 100 may determine that the user is wearing the HMD 100.

When a speaker and a microphone are included on the inner side of the temple of the eyeglasses, the HMD 100 may output a sound signal via the speaker and may obtain a reflected echo signal via the microphone. The HMD 100 may determine whether the user is wearing the HMD 100, using information about the echo signal.

According to an embodiment, the HMD 100 may more accurately determine whether the user is wearing the HMD 100, by combining pieces of information obtained using a plurality of sensors with each other.

According to an embodiment, the HMD 100 may sense eye tracking information of the user (for example, and without limitation, pupil recognition information, information of the number of times the eyes blink, information of an eye-blinking speed, information of an eye direction, or the like) using at least one sensor included in the HMD 100.

According to an embodiment, the HMD 100 may capture an image of the eyes of the user at regular intervals by using an image sensor, and may detect the pupils of the user via an edge analysis of the captured image of the eyes.

According to an embodiment, the HMD 100 may further include an eye tracking camera (not shown) that faces the user. For example, the eye tracking camera may include, for example, and without limitation, an infrared camera. The eye tracking camera may detect user's eyes by tracking the irises of the user.

Referring to FIG. 3, the lens 102 of the HMD 100 may execute a function of the display 111. In this example, the lens 102 may include, for example, and without limitation, a transparent display or a semi-transparent display, or the like. When the lens 102 is includes a semi-transparent display, the lens 102 may, for example, include the same material as a material of the at least one optical waveguide (for example, a prism), an organic light emitting diode (OLED) display, a liquid crystal display (LCD), or the like, but the material of the lens 102 is not limited thereto.

Although FIGS. 2 and 3 illustrate an example where the HMD 100 has the form of eyeglasses. However, it will be understood that the various example embodiments are not limited thereto. For example, the HMD 100 may be attached to a helmet structure or may be transformed into goggles, or the like.

According to an embodiment, the HMD 100 may be a stand-alone device capable of operating even without assistance of any other device. The HMD 100 may, for example, be an apparatus that interoperates with a mobile terminal and/or a cloud server, or the like.

The HMD 100 according to an embodiment may provide an image of AR, mixed reality (MR), and/or virtual reality (VR).

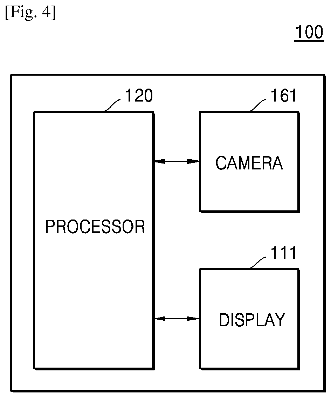

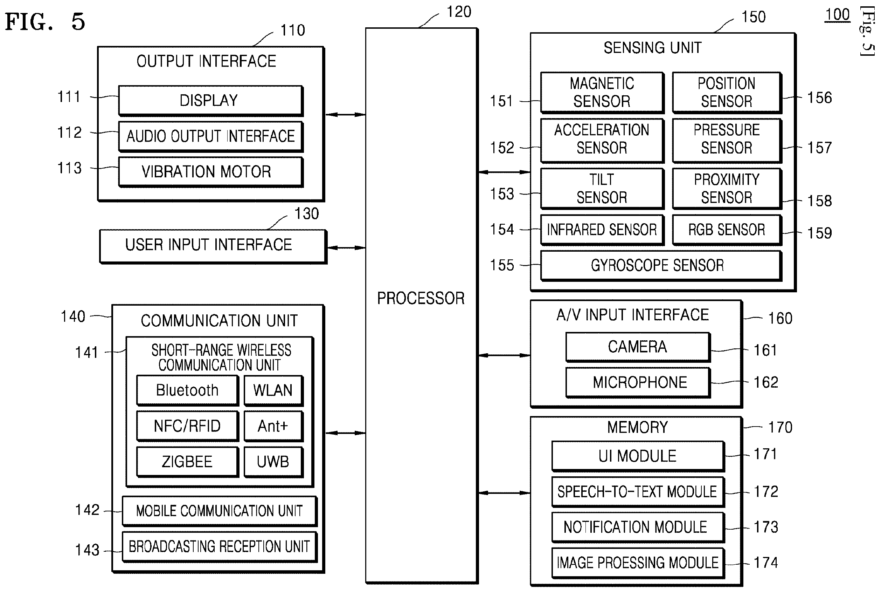

FIGS. 4 and 5 are block diagrams illustrating an example device 100 according to an example embodiment.

Referring to FIG. 4, the device 100 according to an embodiment may include the display 111, the camera 161, and the processor 120. However, all of the illustrated components are not essential. The device 100 may be implemented by more or less components than those illustrated in FIGS. 4 and 5.

For example, as illustrated in FIG. 5, the device 100 according to an embodiment may further include an output interface (e.g., including output circuitry) 110, the user input interface (e.g., including input circuitry) 130, a communication unit (e.g., including communication circuitry)140, a sensing unit (e.g., including sensor circuitry) 150, an audio/video (A/V) input interface (e.g., including A/V input circuitry) 160, and a memory 170, in addition to the display 111, the camera 161, and the processor 120. The sensing unit 150 may be expressed as a sensor unit.

The aforementioned components will now be described in greater detail.

An output interface 110 includes various output circuitry and outputs an audio signal, a video signal, a vibration signal, or the like and may include, for example, and without limitation, the display 111, the audio output interface 112, a vibration motor 113, or the like.

The display 111 may display information that is processed by the device 100. For example, the display 111 may display a surrounding image of the device 100. The display 111 may display a virtual image related with an object included in the surrounding image. The display 111 may, for example, and without limitation, display an image in the form of AR, MR, VR, or the like.

When the display 111 forms a layer structure together with a touch pad to provide a touch screen, the display 111 may be used as an input device as well as an output device. The display 111 may include, for example, and without limitation, at least one of an LCD, a thin film transistor-LCD (TFT-LCD), an OLED, a flexible display, a 3D display, an electrophoretic display, or the like. According to example embodiments of the device 100, the device 100 may include two or more displays 111.

The audio output interface 112 may include various output circuitry and outputs audio data that is received from the communication unit 140 or stored in the memory 170. The audio output interface 112 may also output an audio signal (for example, a call signal receiving sound, a message receiving sound, a notification sound) related with a function of the device 100. The audio output interface 112 may include various output circuitry, such as, for example, and without limitation, a speaker, a buzzer, or the like.

The vibration motor 113 may include various vibration circuitry and output a vibration signal. For example, the vibration motor 113 may output a vibration signal corresponding to an output of audio data or video data (for example, a call signal receiving sound or a message receiving sound). The vibration motor 113 may also output a vibration signal when a touch screen is touched.

The processor 120 may include various processing circuitry and typically controls all operations of the device 100. For example, the processor 120 may control the output interface 110, the user input interface 130, the communicator 140, the sensing unit 150, and the A/V input interface 160 by executing the programs stored in the memory 170.

According to an embodiment, the processor 120 may obtain the surrounding image of the device 100 via the camera 161. The processor 120 may recognize the eyes of a user who is wearing the device 100. The processor 120 may determine one or more objects corresponding to the eyes of the user from among a plurality of objects included in the surrounding image. The processor 120 may perform a preset task corresponding to the determined one or more objects.

According to an embodiment, the processor 120 may detect the plurality of objects included in the obtained surrounding image, and may control the display 111 to overlap virtual icons indicating the detected objects on the surrounding image such that the virtual icons may be mapped with the detected objects, and display a result of the overlapping.

The processor 120 may control the display 111 to overlap a virtual image representing an object corresponding to the eyes of the user from among the plurality of objects included in the surrounding image, on the surrounding image, and display a result of the overlapping.

The processor 120 may determine whether the object corresponding to the eyes of the user corresponds to an object set as a password, based on at least one of the form, the shape, and the color of the object corresponding to the eyes of the user, and may perform a task corresponding to the password.

The processor 120 may determine an order in which the user looks at one or more objects corresponding to the eyes of the user, and perform a preset task corresponding to the determined order.

The processor 120 may sense a hand gesture of the user and perform a preset task corresponding to the hand gesture.

As the processor 120 senses that the user is wearing the device 100, the processor 120 may control the display 111 to overlap a virtual image related with a password input on the surrounding image and display a result of the overlapping.

As the surrounding image obtained via the camera 161 corresponds to a pre-stored image, the processor 120 may control the display 111 to overlap a virtual image related with a password input on the surrounding image and display a result of the overlapping.

Based on a pre-determined user input, the processor 120 may control the display 111 to overlap a virtual image related with a password input on the surrounding image and display a result of the overlapping.

The processor 120 may receive an input of selecting a task corresponding to a password, and, as the user currently wearing the device 100 looks at an object included in the surrounding image obtained by the camera 161, for a predetermined period of time or greater, the processor 120 may store the object being observed as the password corresponding to the selected task.

As the user sequentially looks at one or more objects included in the surrounding image, the processor 120 may store, as a password, the order of looking at the one or more objects.

As the processor 120 senses a hand gesture of the user, the processor 120 may store the hand gesture of the user as a password.

The user input interface 130 may refer, for example, to various input circuitry via which the user inputs data for controlling the device 100. For example, the user input interface 130 may include various input circuitry, such as, for example, and without limitation, a key pad, a dome switch, a touch pad (e.g., a capacitive overlap type, a resistive overlap type, an infrared beam type, an integral strain gauge type, a surface acoustic wave type, a piezo electric type, or the like), a jog wheel, a jog switch, or the like.

The communication unit 140 may include various communication circuitry that enables the HMD 100 to communicate with another device (not shown) or a server (not shown). For example, the communicator 140 may include various communication circuitry included in various units or modules, such as, for example, and without limitation, a short-range wireless communication unit 141, a mobile communication unit 142, a broadcastreception unit 143, or the like.

The short-range wireless communication unit 141 may include, but is not limited to, a Bluetooth communicator, a Bluetooth Low Energy (BLE) communicator, a near field communication (NFC) unit, a wireless local area network (WLAN) (e.g., Wi-Fi) communicator, a ZigBee communicator, an infrared Data Association (IrDA) communicator, a Wi-Fi direct (WFD) communicator, an ultra wideband (UWB) communicator, an Ant+ communicator, and the like.

The mobile communication unit 142 may exchange a wireless signal with at least one selected from a base station, an external terminal, and a server on a mobile communication network. Examples of the wireless signal may include a voice call signal, a video call signal, and various types of data according to text/multimedia messages transmission.

The broadcast reception unit 143 may receive, for example, a broadcast signal and/or broadcasting-related information from an external source via a broadcasting channel. The broadcasting channel may be a satellite channel, a ground wave channel, or the like. According to embodiments, the HMD 100 may not include the broadcasting reception unit 143.

The sensing unit 150 may include various sensors including various sensing circuitry and sense the status of the HMD 100, the status of the surrounding of the HMD 100, the status of the user who wears the HMD 100, or the like, and may transmit the sensed information to the processor 120. For example, the sensing unit 150 may sense a motion of the user and may output a signal related with the motion of the user to the processor 120. The signal may be an electrical signal.

The sensing unit 150 may include, but is not limited thereto, at least one selected from a magnetic sensor 151, an acceleration sensor 152, a tilt sensor 153, the depth sensor 154, a gyroscope sensor 155, a position sensor (e.g., a GPS) 156, an atmospheric pressure sensor 157, a proximity sensor 158, an optical sensor (e.g., RGB) 159, or the like. The sensing unit 150 may include, for example, and without limitation, a temperature sensor, an illumination sensor, a pressure sensor, an iris recognition sensor, or the like. Functions of most of the sensors would be understood by one of ordinary skill in the art in view of their names and thus detailed descriptions thereof will not be provided herein.

The A/V input interface 160 may include various A/V input circuitry that inputs an audio signal or a video signal, and may include, for example, and without limitation, the camera (image sensor) 161, a microphone 162, or the like. The camera (image sensor) 161 may obtain an image frame, such as a still image or a moving picture, in a video call mode or a photography mode. An image captured via the camera (image sensor) 161 may be processed by the processor 120 or a separate image processor (not shown).

The image frame obtained by the camera (image sensor) 161 may be stored in the memory 170 or transmitted to the outside via the communication unit 140. Two or more cameras (image sensors) 161 may be included according to embodiments of the HMD 100.

The microphone 162 may include various circuitry that receives an external audio signal and converts the external audio signal into electrical audio data. For example, the microphone 162 may receive an audio signal from an external device or a speaking person. The microphone 162 may use various noise removal algorithms in order to remove noise that is generated while receiving the external audio signal.

The memory 170 may store a program for processing and control of the processor 120, and may also store pieces of input/output data (for example, information related with password setting, information related with an object corresponding to a password, and task information corresponding to the password).

According to an embodiment, the memory 170 may store an image of an object set as a password. The memory 170 may also store information about the shape, form, color, and the like of the object set as a password.

The memory 170 may include, for example, and without limitation, at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, an optical disk, or the like. The HMD 100 may operate a web storage or a cloud server on the internet which performs a storage function of the memory 170.

The programs stored in the memory 170 may be classified into a plurality of modules according to their functions, for example, and without limitation, a user interface (UI) module 171, a speech-to-text (STT) module 172, a notification module 173, an image processing module 174.

The UI module 171 may provide a UI, graphical user interface (GUI), or the like that is specialized for each application and interoperates with the HMD 100. The notification module 173 may generate a signal for notification related with an object password input. The notification module 173 may output a notification signal in the form of a video signal via the display 111, in the form of an audio signal via the audio output interface 112, or in the form of a vibration signal via the vibration motor 113.

The STT module 172 may convert a voice included in multimedia content into a text to generate a transcript corresponding to the multimedia content.

The image processing module 174 may obtain type information of an object included in an image obtained via analysis of the captured image, and shape information, form information, color information, and the like of the object.

FIGS. 2, 3, 4 and 5 illustrate an example embodiment, and it will be understood that the disclosure is not limited thereto.

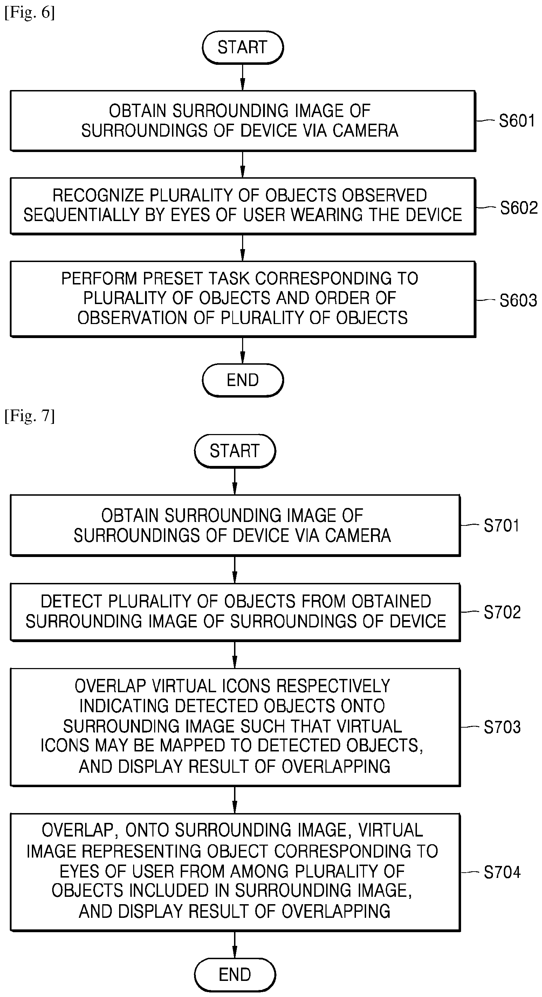

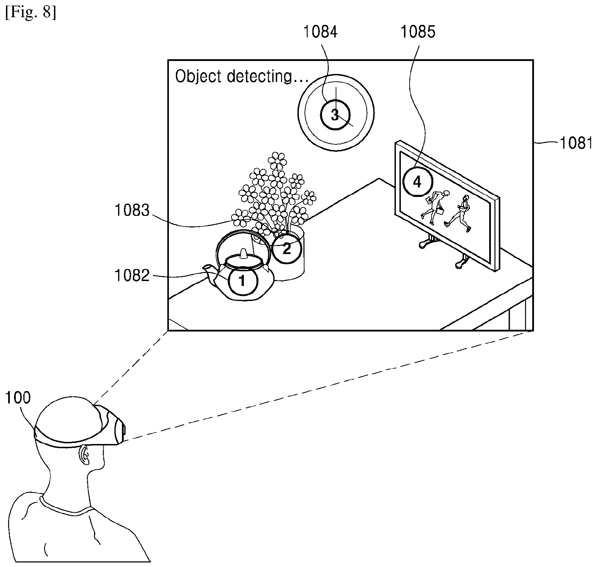

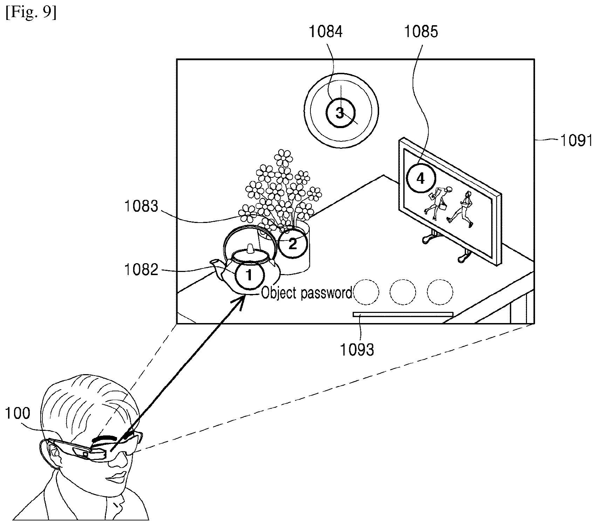

FIG. 6 is a flowchart illustrating an example method of operating a device, according to an example embodiment. FIG. 7 is a flowchart illustrating an example of displaying a virtual image, according to an example embodiment. FIG. 8 is a diagram illustrating example detection of an object from a surrounding image, according to an example embodiment. FIGS. 9, 10 and 11 are diagrams illustrating an example of performing a preset task corresponding to an object at which a user looks, according to an example embodiment. The flowcharts of FIGS. 6 and 7 will now be described with reference to FIGS. 8 through 11.

Referring to FIG. 6, in operation S601, the device 100 according to an embodiment may obtain a surrounding image of the device 100 via the camera 161.

According to an embodiment, the device 100 implemented using an HMD may obtain a surrounding image captured by the camera 161, while the user is wearing the device 100.

According to an embodiment, when the user wears the device 100, the camera 161 may be positioned adjacent to an eye of the user, and thus may capture an image that is similar to a scene recognized via the eyes of the user.

In operation S602, the device 100 according to an embodiment may recognize a plurality of objects observed sequentially by eyes of a user wearing the device. The plurality of objects are included in the surrounding image.

The device 100 according to an embodiment may recognize eyes of the user that sequentially look at a plurality of objects included in the surrounding image. The device 100 according to an embodiment may include an eye tracking camera (not shown) that faces the user. The eye tracking camera may include an infrared camera. The eye tracking camera may detect user's eyes by tracking the irises of the user.

The device 100 according to an embodiment may determine an object corresponding to the eyes of the user from among the plurality of objects included in the surrounding image.

According to an embodiment, the device 100 may capture an image that is similar to a scene recognized via the eyes of the user currently wearing the device 100, via the camera 161. When the user currently wearing the device 100 looks at a surrounding scene, the device 100 may detect user's eyes that look at one direction for a preset time period (for example, 3 seconds) or greater, and determine an object toward which the eyes of the user are directed, from an image obtained by the camera 161.

According to an embodiment, as the device 100 determines the object corresponding to the eyes of the user, the device 100 may recognize that a password has been input.

Referring to FIG. 9, for example, when the user currently wearing the device 100 looks at an object 1082 (for example, a kettle) included in a surrounding image 1091, the device 100 may recognize the object 1082 being observed by the user as a password input.

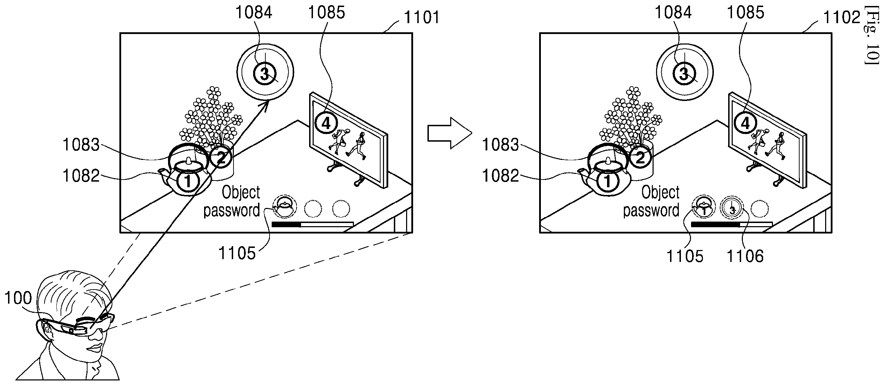

Referring to FIG. 10, for example, when the user currently wearing the device 100 looks at an object 1084 (for example, a clock) included in a surrounding image 1101, the device 100 may recognize the object 1084 being observed by the user as a password input.

At this time, the device 100 may control the display 111 to overlap virtual images 1105 and 1106 representing the objects determined to correspond to the eyes of the user, on the surrounding images 1101 and 1102, and display a result of the overlapping.

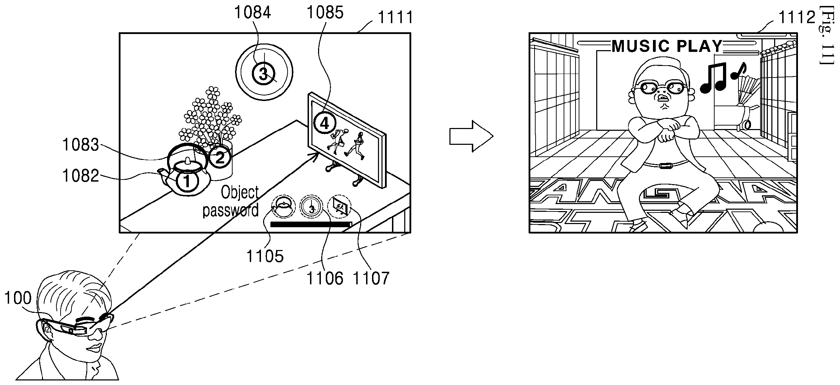

Referring to FIG. 11, for example, when the user currently wearing the device 100 looks at an object 1085 (for example, a picture frame) included in a surrounding image 1111, the device 100 may recognize the object 1085 being observed by the user as a password input.

The device 100 may overlap virtual images 1105, 1106, and 1107 representing the objects determined to correspond to the eyes of the user, on the surrounding image 1111, and may display a result of the overlapping. Accordingly, the user may check an object input as a password.

As illustrated in FIGS. 9, 10 and 11, the device 100 may recognize eyes that sequentially look at the plurality of objects 1082, 1084, and 1085.

According to an embodiment, the device 100 may provide a UI for requesting an object password to be input.

According to an embodiment, the device 100 may overlap a virtual image for requesting selection of an object set as a password, on a surrounding image obtained by the camera 161, and display a result of the overlapping. For example, referring to FIG. 9, the device 100 may display a virtual image 1093 for requesting an object password to be input.

According to an embodiment, the device 100 may recognize, as a password, an object determined to correspond to user's eyes, in response to the UI for requesting an object password to be input.

According to an embodiment, as the device 100 senses that the device 100 has been worn by the user, the device 100 may overlap a virtual image related with a password input on the surrounding image and display a result of the overlapping. A method in which that the device 100 senses that the user is wearing the device 100 has been described above with reference to FIG. 2, and thus a detailed description thereof will not be provided.

According to an embodiment, as the surrounding image obtained by the camera 161 corresponds to a pre-stored image, the device 100 may overlap a virtual image for requesting selection of an object set as a password, on the surrounding image, and display a result of the overlapping.

According to an embodiment, when the user currently wearing the device 100 enters a certain place and the device 100 determines that the surrounding image obtained by the camera 161 is similar to a surrounding image including an object pre-stored as a password, the device 100 may provide an interface for requesting a password input. For example, when the user enters a space in which an object password for executing a game application has been set, the device 100 may provide a UI for a password input.

According to an embodiment, based on a predetermined user input (for example, a user voice command), the device 100 may overlap a virtual image for requesting selection of an object set as a password, on the surrounding image, and display a result of the overlapping.

Referring back to FIG. 6, in operation S603, the device 100 according to an embodiment may perform a preset task corresponding to a plurality of objects and an order of looking at the plurality of objects.

According to an embodiment, the device 100 may store the plurality of objects as a password needed to perform a certain task. As the device 100 according to an embodiment recognizes that the user looks at the plurality of objects in a certain order, the device 100 may determine that a password has been input. When it is determined that an object corresponding to the eyes of the user is identical with an object pre-stored as a password, the device 100 may perform a task (for example, execution of a music playback application) stored in correspondence with the password. Referring to FIG. 11, for example, when the plurality of objects 1082, 1084, and 1085 determined according to the eyes of the user and an order of looking at the plurality of objects 1082, 1084, and 1085 correspond to a combination of objects preset as a password, a music playback application set in correspondence with the password may be executed. At this time, the device 100 may display a graphic image 1112 related with music playback on the display 111.

According to an embodiment, the device 100 may determine whether an object corresponding to the eyes of the user corresponds to an object set as a password, based, for example, and without limitation, on at least one of the form, the shape, and the color of the object, and may perform a task corresponding to the password.

According to an embodiment, the device 100 may determine whether a recognized object is recognized as an object that is the same as an object preset as a password within a preset recognition error range.

According to an embodiment, even when the recognized object is the same as the object preset as a password on an actual space, a recognition error according to photographing conditions (for example, a distance between the camera 161 and an object, a photographing angle therebetween, and surrounding illuminance) may occur. The device 100 may calculate (determine) an allowable recognition error range using an image processing algorithm and may determine an object recognized within the calculated allowable recognition error range as an identical object.

FIG. 7 is a flowchart illustrating example display of a virtual image, according to an example embodiment.

In operation S701, the device 100 according to an embodiment may obtain a surrounding image of the device 100, via a camera. Operation S701 is the same as operation S601 of FIG. 6 described above, and thus a detailed description thereof will not be repeated here.

In operation S702, the device 100 according to an embodiment may detect a plurality of objects from the obtained surrounding image of the device 100.

Referring to FIG. 8, the device 100 may detect a plurality of objects 1082, 1083, 1084, and 1085 from the surrounding image 1081 obtained by the camera 161, using an image processing algorithm. For example, the plurality of objects 1082, 1083, 1084, and 1085 may be objects existing in an actual space, such as a kettle 1082, a flowerpot 1083, a clock 1084, and a picture frame 1085, but embodiments are not limited thereto.

In operation S703, the device 100 according to an embodiment may control the display 111 to overlap virtual icons indicating the detected objects on the surrounding image such that the virtual icons may be mapped with the detected objects and display a result of the overlapping.

According to an embodiment, the device 100 may overlap a virtual icon (for example, and without limitation, a number icon, a dotted line, or a symbol icon, such as an arrow) indicating each of the objects included in a surrounding image being observed by the user, on the surrounding image such that the virtual icons may be mapped with the objects, and display a result of the overlapping.

Referring to FIG. 8, for example, respective number icons indicating the plurality of objects 1082, 1083, 1084, and 1085 included in the surrounding image 1081 looked at by the user currently wearing the device 100 may be displayed to be recognized by being mapped with the objects 1082, 1083, 1084, and 1085.

According to an embodiment, a virtual icon or a virtual image may, for example, be a 3D graphic image, and may be displayed while being overlapped on an actual image such that the virtual icon or the virtual image may be recognized seamlessly within the setting of an actual space.

According to an embodiment, the user may check virtual icons (for example, number icons) (see FIG. 8) displayed by being mapped with the plurality of objects included in the surrounding image 1081 via the display 111 and may perform a password input by looking at one or more of the identified plurality of objects.

Referring back to FIG. 7, in operation S704, the device 100 according to an embodiment may overlap a virtual image representing an object corresponding to the eyes of the user from among the plurality of objects included in the surrounding image, on the surrounding image, and display a result of the overlapping.

According to an embodiment, as the device 100 detects user's eyes looking at one object for a predetermined time period (for example, 3 seconds) or greater, the device 100 may recognize the object corresponding to the eyes of the user as a password input.

The device 100 may generate and display a virtual image such that the user may check the object recognized as a password input.

Referring to FIG. 10, for example, the device 100 may overlap the virtual image 1106 representing the object 1084 (e.g., a clock) determined to correspond to the eyes of the user, on the surrounding image 1102, and display a result of the overlapping. Referring to FIG. 11, for example, the device 100 may overlap the virtual image 1107 representing the object 1085 (e.g., a picture frame) determined to correspond to the eyes of the user, on the surrounding image 1111, and display a result of the overlapping.

FIGS. 6, 7, 8, 9, 10 and 11 illustrate an example embodiment, and thus the disclosure is not limited thereto.

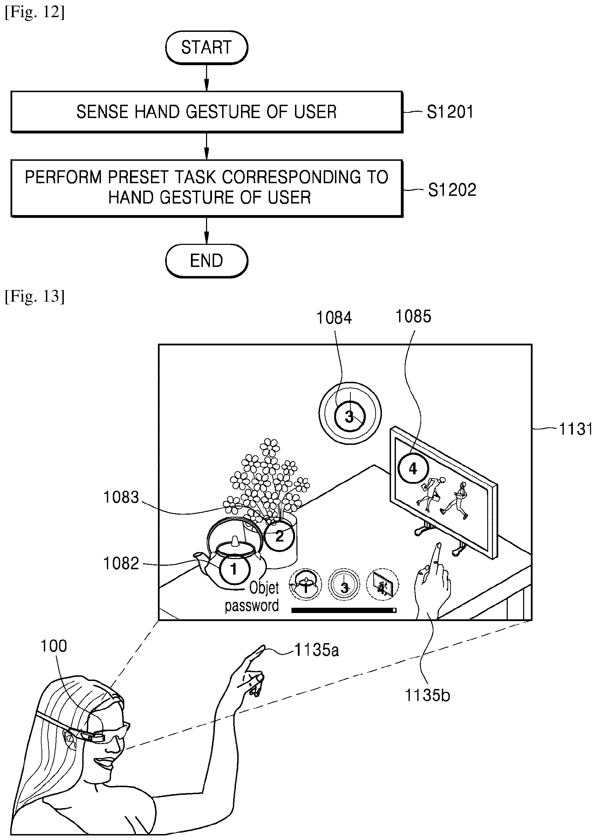

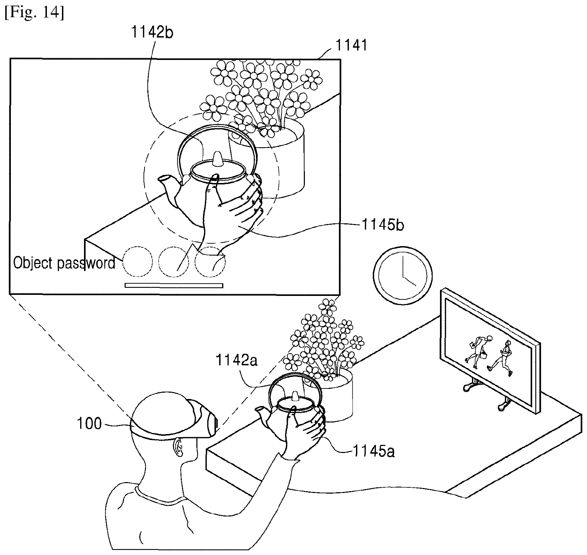

FIG. 12 is a flowchart illustrating an example of performing a task corresponding to a hand gesture of a user according to an example embodiment. FIGS. 13 and 14 are diagrams illustrating an example of performing a task corresponding to a hand gesture of a user according to an example embodiment. The flowchart of FIG. 12 will now be described with reference to FIGS. 13 and 14.

In operation S1201, the device 100 according to an embodiment may sense the hand gesture of the user.

For example, when the user makes a hand movement while wearing the device 100 on his or her head, when the hand movement of the user is within a viewing angle of the user, the hand movement may be included in a surrounding image obtained by the device 100 via the camera 161. The device 100 may sense the hand movement of the user included in the surrounding image.

Referring to FIG. 13, for example, when a hand 1135a of a user currently wearing the device 100 makes a gesture of pointing to an object 1085 (for example, a picture frame) included in a scene 1131 of a user viewing angle, the device 100 may recognize a gesture of a hand 1135b of the user via the camera 161.

Referring to FIG. 14, for example, when a hand 1145a of a user currently wearing the device 100 makes a gesture of grabbing an object 1142a (for example, a kettle) existing within the sight of the user, the device 100 may sense a gesture of a hand 1145b of the user of grapping an object 1142b included in a scene 1141 via the camera 161.

Referring back to FIG. 12, in operation S1202, the device 100 according to an embodiment may perform a preset task corresponding to the hand gesture of the user.

According to an embodiment, when the device 100 determines that the sensed hand gesture of the user corresponds to a preset password, the device 100 may perform a preset task corresponding to the password.

According to an embodiment, the device 100 may set a combination of a plurality of hand gestures as a password. The device 100 may set, as a password, an order in which a plurality of hand gestures are sequentially made.

According to an embodiment, the device 100 may set a combination of a certain object and a certain hand gesture as a password, but the disclosure is not limited thereto.

FIGS. 12, 13 and 14 illustrate an example embodiment, and thus the disclosure is not limited thereto.

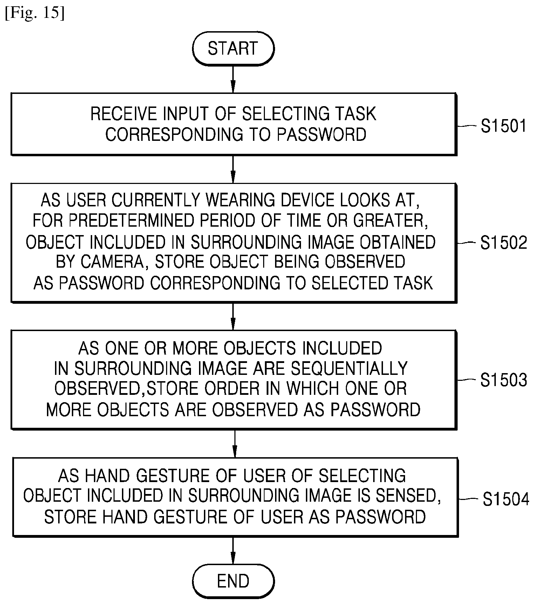

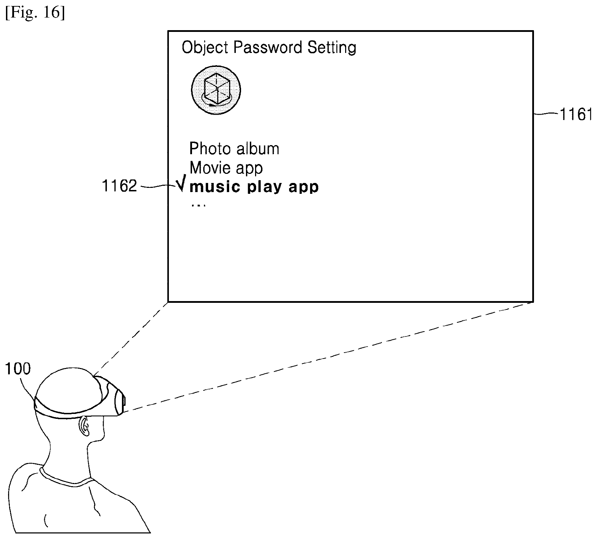

FIG. 15 is a flowchart illustrating an example of setting a password using an object. FIGS. 16, 17A, 17B, 18, 19A and 19B are diagrams illustrating an example of setting a password using an object. The flowchart of FIG. 15 will now be described with reference to FIGS. 16 through 19.

In operation S1501, the device 100 according to an embodiment may receive an input of selecting a task corresponding to a password.

According to an embodiment, the device 100 may set a certain task that is to be performed as a password is input, in response to a user input. According to an embodiment, the device 100 may set a certain task in response to an input according to a voice command of the user, but the disclosure is not limited thereto.

According to an embodiment, a task may be, but is not limited to, execution of a certain application (for example, a game application or a music playback application) or release of a lock screen.

Referring to FIG. 16, for example, the device 100 may display, on the display 111, a UI screen 1161 including a list of tasks. The device 100 may set a music playback application 1162 in response to a user input.

In operation S1502, as the user currently wearing the device 100 looks at, for a predetermined period of time or greater, an object included in a surrounding image obtained by a camera, the device 100 according to an embodiment may store the object being observed as the password corresponding to the selected task.

According to an embodiment, one or more objects within an actual space being observed by the user currently wearing the device 100 may be set as a password.

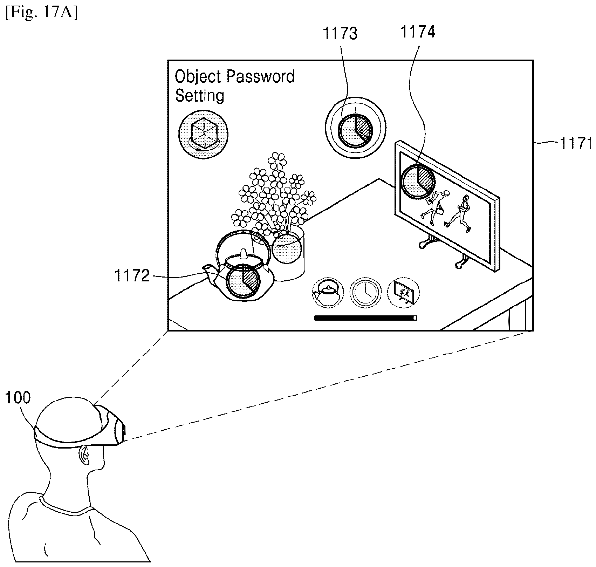

Referring to FIG. 17A, as the user currently wearing the device 100 looks at, for a preset time period (e.g., 3 seconds) or greater, an object 1172 (for example, a kettle) included in a scene 1171 being observed by the user, the object 1172 being observed may be selected as a password.

As the user looks at each of a plurality of objects 1172, 1173, and 1174 for a preset time period or greater, a combination of the plurality of objects 1172, 1173, and 1174 may be set as a password.

In operation S1503, as the device 100 according to an embodiment sequentially looks at one or more objects included in the surrounding image, the device 100 may store the order of looking at the one or more objects as a password.

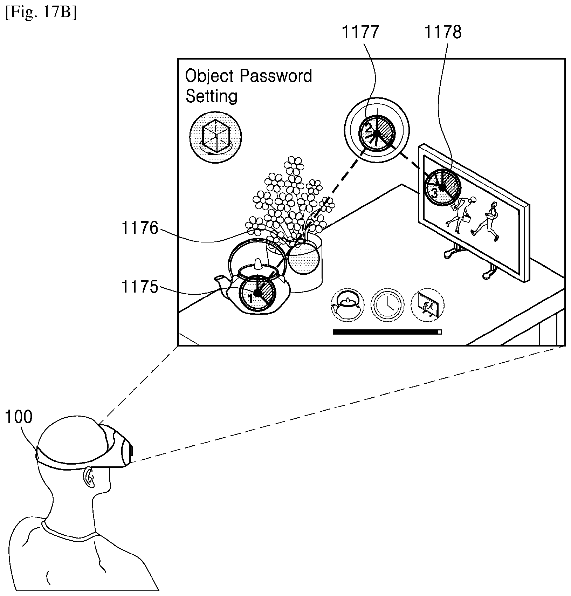

Referring to FIG. 17B, when the user currently wearing the device 100 sequentially looks at one or more objects (for example, objects 1175, 1177, and 1178) from among a plurality of objects 1175, 1176, 1177, and 1178 existing in the sight of the user, a combination of the looked-at objects 1175, 1177, and 1178 and the order of looking at the objects 1175, 1177, and 1178 may be set as a password.

In operation S1504, as the device 100 according to an embodiment senses a hand gesture of the user of selecting an object included in the surrounding image, the device 100 may store the hand gesture of the user as a password.

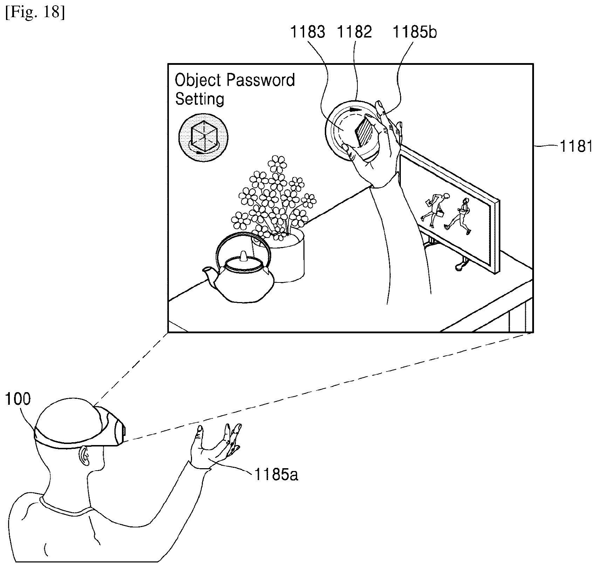

Referring to FIG. 18, for example, when a user currently wearing the device 100 makes a hand gesture 1185a of grabbing a ball, the device 100 may sense a hand gesture 1185b of the user from a surrounding image 1181 of the sight of the user obtained via the camera 161. The device 100 may store a combination of an object 1182 (for example, a clock) recognized in relation to the hand gesture 1185b of the user and the hand gesture 1185b of the user, as a password.

According to an embodiment, the device 100 may provide a virtual graphic image such that the user may check that the object 1182 has been selected. For example, referring to FIG. 18, as the device 100 senses the hand gesture 1185b of the user, the device 100 may display a virtual image 1183 on a display such that the virtual image 1183 may be mapped with the hand gesture 1185b of the user.

According to an embodiment, the order of operations S1501 through S1504 of FIG. 15 may be changed, and a password according to execution of at least one operation thereof may be set. A password may be set according to a combination of one or more of the operations S1502 through S1504. For example, a plurality of objects may be stored as a password, or a combination of one or more objects and a hand gesture of the user may be stored as a password. A combination of a plurality of hand gestures may be stored as a password, but embodiments are not limited thereto.

FIGS. 15, 16, 17A, 17B and 18 illustrate an example embodiment, and thus the disclosure is not limited thereto.

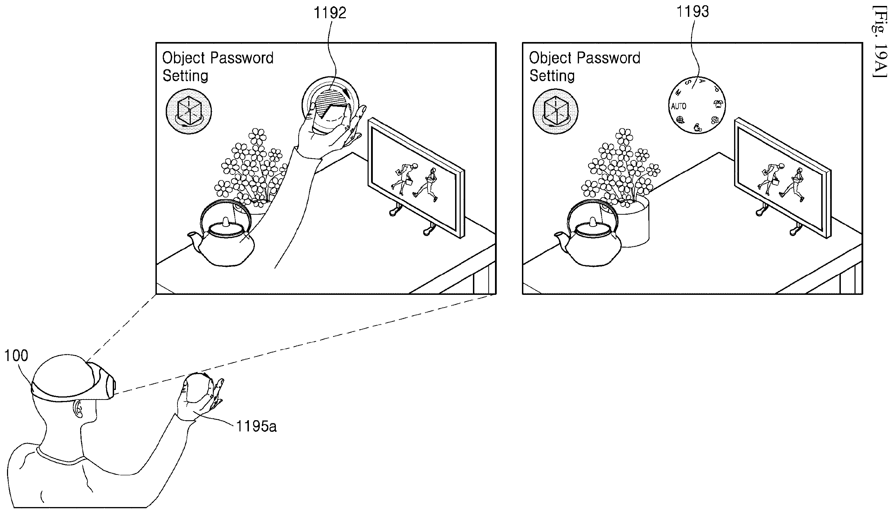

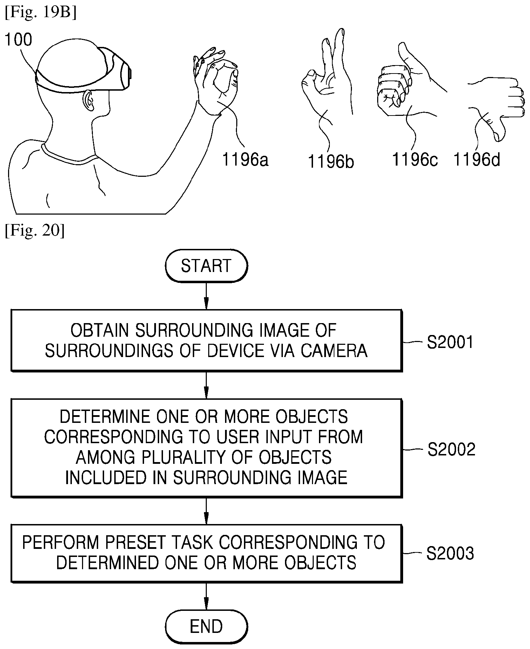

FIGS. 19A and 19B are diagrams illustrating an example of setting a password using a hand gesture of a user according to an example embodiment.

According to an embodiment, as the device 100 senses a hand gesture of a user, the device 100 may enter a menu for setting a password.

For example, the device 100 may display a virtual graphic icon 1192 for entering a password setting menu. The virtual graphic icon 1192 may be provided together with a virtual arrow image such that the user may intuitively recognize that the virtual graphic icon 1192 is to be rotated clockwise to enter the menu.

For example, when the device 100 senses a hand gesture 1195a of the user, such as rotating the virtual graphic icon 1192 clockwise, the device 100 may provide a dialtype menu icon 1193 as a virtual graphic image.

The device 100 may select a menu, based on a hand gesture input of rotating the dialtype menu icon 1193.

According to an embodiment, the user may perform an input, such as menu entering or menu section, for setting a password via a hand gesture input.

Referring to FIG. 19B, according to an embodiment, when the device 100 senses that the user sequentially makes one or more hand gestures, the device 100 may store a sequential combination of the hand gestures as a password.

For example, as illustrated in FIG. 19B, the device 100 may store a combination of various hand gestures 1196a, 1196b, 1196c, and 1196d of the user as a password.

According to an embodiment, the device 100 may set one hand gesture as a password. According to an embodiment, the device 100 may set a plurality of hand gestures as a password, regardless of an order thereof.

FIGS. 19A and 19B illustrate an example embodiment, and thus the disclosure is not limited thereto.

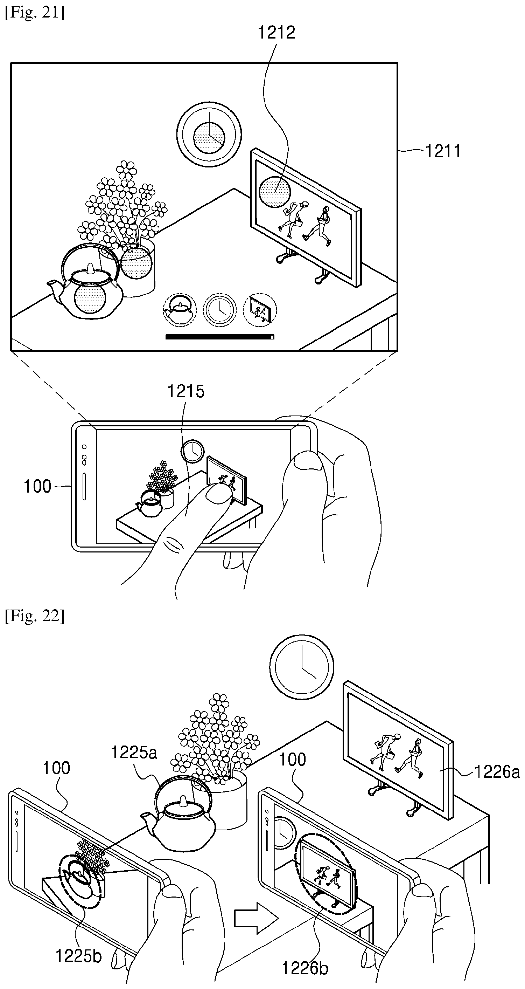

FIG. 20 is a flowchart illustrating an example method of operating a device, according to another example embodiment. FIGS. 21 and 22 are diagrams for illustrating example recognition of an object corresponding to a user input, according to another example embodiment. The flowchart of FIG. 20 will now be described with reference to FIGS. 21 and 22.

In FIGS. 20, 21 and 22, the device 100 may, for example, and without limitation, be a mobile phone.

In operation S2001, the device 100 according to an embodiment may obtain a surrounding image of the device 100, via the camera 161.

According to an embodiment, while a user is holding the device 100 (hereinafter, referred to, by way of non-limiting example, as a mobile phone 100) with his or her hand, as the camera 161 of the device 100 is driven, the surrounding image of the device 100 may be obtained via the camera 161.

In operation S2002, the device 100 according to an embodiment may determine one or more objects corresponding to a user input from among a plurality of objects included in the surrounding image.

Referring to FIG. 21, the mobile phone 100 may display a surrounding image 1211 obtained via the camera 161, on the display 111. According to an embodiment, according to a touch input of selecting, with a hand 1215 of the user, an object 1212 included in the surrounding image 1211 displayed on the display 111 implemented using a touch screen, the selected object 1212 may be recognized as a password.

As another example, referring to FIG. 22, while the user is holding the mobile phone 100 on his or her hand, the device 100 may recognize an object 1225b focused on the display 111 as a password according to a user input of photographing an object 1225a (for example, a kettle) on an actual space via the camera 161.

According to a user input of sequentially focusing a plurality of objects 1225a and 1226a (for example, a kettle and a picture frame) via the camera 161 of the mobile phone 100, the mobile phone 100 may recognize a plurality of focused objects 1225b and 1226b as a password.

In operation S2003, the device 100 according to an embodiment may perform a preset task corresponding to the determined one or more objects.

According to an embodiment, the device 100 may perform the preset task in accordance with a combination of the one or more objects or an order in which the one or more objects are selected. For example, referring to FIG. 22, the device 100 may perform a task (for example, execution of a movie application) that has set a combination of the plurality of objects 1225a and 1226a (for example, a kettle and a picture frame) as a password.

FIGS. 20, 21 and 22 illustrate an example embodiment, and thus the disclosure is not limited thereto.

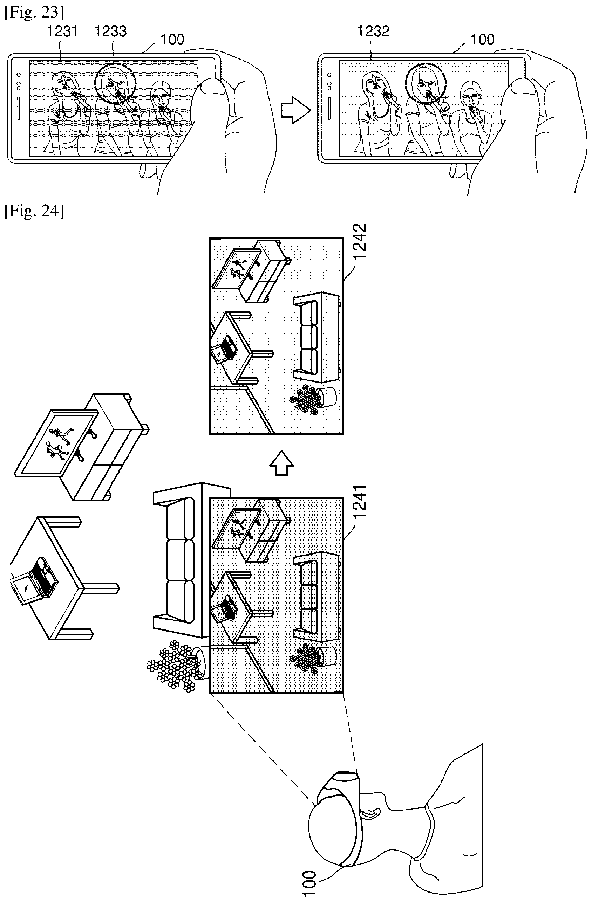

FIG. 23 is a diagram illustrating an example of performing a preset task according to recognition of a certain person, according to an example embodiment.

According to an embodiment, when a person is included in an image obtained via the camera 161 while a camera application is being performed, the device 100 may recognize the face of the person using a person recognition algorithm.

According to an embodiment, as the device 100 recognizes the face of a person included in a surrounding image 1231 obtained via the camera 161, when the face of the person is recognized as the face of a preset person 1233 (for example, a daughter of the user), the device 100 may apply a preset photographing filter value in correspondence with the preset person 1233. For example, when the preset person 1233 is included in the surrounding image 1231, the device 100 may execute a bright image mode by adjusting brightness. Accordingly, the device 100 may capture an image 1232 by applying a filter value of the bright image mode.

According to another embodiment, when a person is included in the surrounding image 1231 obtained via the camera 161, the device 100 may receive a user input of selecting the person 1233 being displayed on the display 111. When the device 100 recognizes the face of a selected person using a person recognition algorithm and a preset photographing filter value exists in correspondence with the recognized face, the device 100 may capture an image by applying the preset photographing filter value.

FIG. 24 is a diagram illustrating an example of performing a preset task according to the contrast of an object, according to an example embodiment.

According to an embodiment, the device 100 may sense the contrast of a surrounding image 1241 obtained via the camera 161. The device 100 may sense the contrast of an object included in the surrounding image 1241.

According to an embodiment, when it is determined that the sensed contrast is less than a preset value, the device 100 may execute a night mode. For example, the device 100 may adjust a display setting value (for example, brightness) such that the user may recognize a brighter image 1242 than an actual image via the display 111.

FIGS. 23 and 24 illustrate an example embodiment, and thus the disclosure is not limited thereto.

The aforementioned example embodiments should be considered in a descriptive sense only and not for purposes of limitation and are not limited to an order of the operations in the flowcharts. According to other example embodiments, some operations may be skipped or added, and an order of some operations may be changed.

The above-described embodiments can be written as computer programs and can be implemented in general-use digital computers that execute the programs using a computer readable recording medium. A structure of the data used in the above-described embodiments may be recorded in a computer readable recording medium in several ways. The above-described embodiments can also be embodied as a storage medium including computer-executable instructions such as computer-executable modules. For example, when software modules or algorithms are involved, these software modules may be stored as codes or program instructions which may be read and executed by a computer in a computer-readable recording medium.

A computer readable medium can be any recording medium which can be accessed by the computer and includes all volatile/non-volatile and removable/non-removable media. Examples of the computer readable recording medium include, but are not limited to, magnetic storage media (e.g., ROM, floppy disks, hard disks, etc.), optical recording media (e.g., CD-ROMs, or DVDs), etc. Further, the computer readable medium may include all computer storage and communication media.

A plurality of computer readable recording media can be distributed over network coupled computer systems, and data stored in the distributed recording media, for example, program instruction words and codes, may be executed by at least one computer.

The various example embodiments illustrated and described herein are merely illustrative embodiments and are not intended to otherwise limit the scope of embodiments in any way. For the sake of brevity, conventional electronics, control systems, software development and other functional aspects of the systems may not be described in detail.

Although the various example embodiments of the present disclosure have been disclosed for illustrative purposes, one of ordinary skill in the art will appreciate that diverse variations and modifications are possible, without changing the technical spirit or essential features of the disclosure. Thus, the above examples should be understood not to be restrictive but to be illustrative, in all aspects. For example, respective elements described in an integrated form may be dividedly used, and the divided elements may be used in a state of being combined.

The use of any and all examples, or example language (e.g., "for example" and "such as") provided herein, is intended merely to better illuminate the disclosure and does not pose a limitation on the scope of the appended claims.

Moreover, no item or component is essential to the practice of the disclosure unless the element is specifically described as "essential" or "critical".

It will be understood by those of ordinary skill in the art that various changes in form and details may be made to the present embodiment without departing from the intrinsic characteristics of the above descriptions.

As the disclosure allows for various changes and numerous embodiments, particular embodiments will be illustrated in the drawings and described in detail in the written description. Thus, it should be understood that the disclosed embodiments should be considered in a descriptive sense only and not for purposes of limitation.

The terms "unit", "-er (-or)", and "module" when used in this disclosure may be used to refer to a unit in which at least one function or In operation is performed, and may be implemented as hardware, software, or a combination of hardware and software.

The terms "...or(er)", "... interface", and "... module" may be stored in an addressable storage medium and may be implemented by a program that may be executed by a processor.

For example, the "...or(er)", "... interface", and "... module" may be implemented by object-oriented software components, class components, and task components, and processes, functions, attributes, procedures, subroutines, segments of a program code, drivers, firmware, a micro code, a circuit, data, a database, data structures, tables, arrays, and variables.

In this specification, the recitation "A may include one of a1, a2, and a3" broadly means that an example element that may be included in the element A is a1, a2, or a3.

The above recitation does not necessarily imply that an element capable of constituting the element A is limited to a1, a2 or a3. Thus, it should be noted that elements that may be A are not exclusively interpreted in the sense that they exclude elements other than a1, a2 and a3 which are not illustrated.

In addition, the above recitation means that A may include a1, include a2, or include a3. The above recitation does not imply that elements of A are essentially determined within a given set. For example, it should be noted that the above recitation should not necessarily be understood as meaning that a1, a2, or a3 selected from a set including a1, a2, and a3 constitutes component A.

In this disclosure, the recitation "at least one of a1, a2, and a3" means one of "a1", "a2", "a3", "a1 and a2", "a1 and a3", "a2 and a3", and "a1, a2 and a3".

## Claims

1. A device (100) configured to provide an augmented reality, AR, service, the device (100) comprising:
a display (111);
a camera (161); and
a processor (120) configured to:
control the camera (161) to obtain a surrounding image of surroundings of the device (100);
control the display (111) to display the obtained surrounding image;
detect a plurality of real objects included in the obtained surrounding image;
display a plurality of virtual icons mapped to the plurality of real objects detected in the surrounding image and indicating the plurality of detected real objects, overlapping the plurality of detected real objects, so that the user observes the plurality of real objects indicated by the plurality of virtual icons;
recognize a plurality of real objects observed sequentially by eyes of a user wearing the device; and
display the plurality of virtual icons representing the plurality of real objects gazed by the user sequentially on the surrounding image according to the order in which the user gazed at the plurality of real objects;
determine whether the recognized plurality of real objects correspond to a plurality of objects preset as a password;
based on determining that the recognized plurality of real objects correspond to the plurality of objects preset as the password, perform a preset task corresponding to the plurality of real objects and an order in which the plurality of real objects are observed.

2. The device (100) of claim 1, wherein the processor (120) is further configured to control a display (111) to overlap, onto the surrounding image, a virtual image representing an object observed by the eyes of the user from among the plurality of real objects included in the surrounding image, and display a result of the overlapping.

3. The device (100) of claim 1, wherein the processor (120) is further configured to control the device (100) to sense a hand gesture of the user and to perform a preset task corresponding to the hand gesture.

4. The device (100) of claim 1, wherein, the processor (120) is further configured to control a display (111) to overlap, onto the surrounding image, a virtual image related to a password input when it is sensed that the device is being worn by the user, and display a result of the overlapping.

5. The device (100) of claim 1, wherein, the processor (120) is further configured to control a display (111) to overlap, onto the surrounding image, a virtual image related to a password input when the surrounding image of the device (100) obtained via the camera (161) corresponds to a pre-stored image, and display a result of the overlapping.

6. The device (100) of claim 1, wherein the processor (120) is further configured to control a display (111) to overlap, onto the surrounding image, a virtual image related to a password input based on a predetermined user input, and display a result of the overlapping.

7. The device (100) of claim 1, wherein the processor (120) is further configured to:
receive an input selecting a task corresponding to a password; and
store the object being observed as the password corresponding to the selected task as the user observes, for a predetermined period of time or greater, an object included in the surrounding image.

8. The device (100) of claim 7, wherein, the processor (120) is configured to store, as the password, an order in which one or more objects are observed when the user sequentially observes one or more objects included in the surrounding image.

9. The device (100) of claim 7, wherein, the processor (120) is configured to store a hand gesture of the user as the password when the hand gesture of the user is sensed.

10. The device (100) of claim 1, wherein the preset task includes at least one of: execution of an application and unlocking of the device (100).

11. A method of operating a device (100) configured to provide an augmented reality, AR, service, the method comprising:
obtaining a surrounding image of surroundings of the device via a camera (161);
displaying the obtained surrounding image;
detecting a plurality of real objects included in the obtained surrounding image;
displaying a plurality of virtual icons mapped to the plurality of real objects detected in the surrounding image and indicating the plurality of detected real objects, overlapping the plurality of detected real objects, so that the user observes the plurality of real objects indicated by the plurality of virtual icons;
recognizing a plurality of real objects observed sequentially by eyes of a user wearing the device; and
displaying the eplurality of virtual icons representing the plurality of real objects gazed by the user sequentially on the surrounding image according to the order in which the user gazed at the plurality of real objects;
determining whether the recognized plurality of real objects correspond to a plurality of objects preset as a password;
based on determining that the recognized plurality of real objects correspond to the plurality of objects preset as the password, performing a preset task corresponding to the plurality of real objects and an order in which the plurality of real objects are observed.

12. A non-transitory computer-readable recording medium having recorded thereon a computer program, which, when executed by a computer, performs the method of claim 11.

## Patentansprüche

1. Gerät (100), das so konfiguriert ist, dass es einen Augmented Reality-Dienst (AR) bereitstellt, wobei das Gerät (100) Folgendes umfasst:
eine Anzeige (111);
eine Kamera (161); und
einen Prozessor (120), der dazu konfiguriert ist:
die Kamera (161) zu steuern, um ein Umgebungsbild der Umgebung des Geräts (100) zu erhalten;
die Anzeige (111) zu steuern, um das erhaltene Umgebungsbild anzuzeigen;
eine Vielzahl realer Objekte zu erkennen, die in dem erhaltenen Umgebungsbild enthalten sind;
eine Vielzahl von virtuellen Symbolen anzuzeigen, die der Vielzahl von realen Objekten zugeordnet sind, die im Umgebungsbild erkannt wurden, und die Vielzahl von erkannten realen Objekten anzeigen, wobei sie die Vielzahl von erkannten realen Objekten überlappen, sodass der Benutzer die Vielzahl von realen Objekten wahrnimmt, die durch die Vielzahl von virtuellen Symbolen angezeigt werden;
eine Vielzahl realer Objekte zu erkennen, die nacheinander von den Augen eines Benutzers beobachtet werden, der das Gerät trägt; und
die Vielzahl virtueller Symbole, die die Vielzahl realer Objekte darstellen, auf die der Benutzer nacheinander auf dem umgebenden Bild blickt, entsprechend der Reihenfolge, in der der Benutzer auf die Vielzahl realer Objekte geblickt hat;
zu bestimmen, ob die erkannte Vielzahl realer Objekte einer Vielzahl von Objekten entspricht, die als Passwort voreingestellt sind;
basierend auf der Bestimmung, dass die erkannte Vielzahl realer Objekte der Vielzahl von Objekten entspricht, die als Passwort voreingestellt sind, eine voreingestellte Aufgabe auszuführen, die der Vielzahl realer Objekte und einer Reihenfolge entspricht, in der die Vielzahl realer Objekte beobachtet wird.

2. Gerät (100) nach Anspruch 1, wobei der Prozessor (120) ferner dazu konfiguriert ist, eine Anzeige (111) so zu steuern, dass sie auf das Umgebungsbild ein virtuelles Bild überlagert, das ein von den Augen des Benutzers wahrgenommenes Objekt aus der Vielzahl von realen Objekten darstellt, die im Umgebungsbild enthalten sind, und ein Ergebnis der Überlagerung anzuzeigen.

3. Gerät (100) nach Anspruch 1, wobei der Prozessor (120) ferner dazu konfiguriert ist, das Gerät (100) so zu steuern, dass es eine Handgeste des Benutzers erkennt und eine voreingestellte Aufgabe entsprechend der Handgeste ausführt.

4. Gerät (100) nach Anspruch 1, wobei der Prozessor (120) ferner dazu konfiguriert ist, eine Anzeige (111) so zu steuern, dass sie auf das umgebende Bild ein virtuelles Bild überlagert, das mit einer Passworteingabe in Zusammenhang steht, wenn erkannt wird, dass das Gerät vom Benutzer getragen wird, und ein Ergebnis der Überlagerung anzuzeigen.

5. Gerät (100) nach Anspruch 1, wobei der Prozessor (120) ferner dazu konfiguriert ist, eine Anzeige (111) so zu steuern, dass sie auf das Umgebungsbild ein virtuelles Bild überlagert, das mit einer Passworteingabe in Zusammenhang steht, wenn das über die Kamera (161) erhaltene Umgebungsbild des Geräts (100) einem vorab gespeicherten Bild entspricht, und ein Ergebnis der Überlagerung anzuzeigen.

6. Gerät (100) nach Anspruch 1, wobei der Prozessor (120) ferner dazu konfiguriert ist, eine Anzeige (111) zu steuern, um auf das umgebende Bild ein virtuelles Bild zu überlagern, das mit einer Kennworteingabe auf der Grundlage einer vorgegebenen Benutzereingabe in Zusammenhang steht, und ein Ergebnis der Überlagerung anzuzeigen.

7. Gerät (100) nach Anspruch 1, wobei der Prozessor (120) ferner dazu konfiguriert ist:
eine Eingabe zu empfangen, die eine Aufgabe auswählt, die einem Passwort entspricht; und
das beobachtete Objekt als das Passwort zu speichern, das der ausgewählten Aufgabe entspricht, während der Benutzer für einen vorbestimmten Zeitraum oder länger ein Objekt beobachtet, das im Umgebungsbild enthalten ist.

8. Gerät (100) nach Anspruch 7, wobei der Prozessor (120) dazu konfiguriert ist, als Passwort eine Reihenfolge zu speichern, in der ein oder mehrere Objekte beobachtet werden, wenn der Benutzer nacheinander ein oder mehrere Objekte beobachtet, die im Umgebungsbild enthalten sind.

9. Gerät (100) nach Anspruch 7, wobei der Prozessor (120) dazu konfiguriert ist, als Passwort eine Handbewegung des Benutzers zu speichern, wenn die Handbewegung des Benutzers erfasst wird.

10. Gerät (100) nach Anspruch 1, wobei die voreingestellte Aufgabe mindestens eines von Ausführen einer Anwendung und Entsperren des Geräts (100) umfasst.

11. Verfahren zum Betreiben eines Geräts (100), das so konfiguriert ist, dass es einen Augmented Reality-AR-Dienst bereitstellt, wobei das Verfahren Folgendes umfasst:
Erfassen eines Umgebungsbilds der Umgebung des Geräts über eine Kamera (161);
Anzeigen des erfassten Umgebungsbilds;
Erkennen einer Vielzahl realer Objekte, die in dem erfassten Umgebungsbild enthalten sind;
Anzeigen einer Vielzahl virtueller Symbole, die der Vielzahl realer Objekte zugeordnet sind, die im Umgebungsbild erkannt wurden, und die Vielzahl erkannter realer Objekte angeben, wobei sie die Vielzahl erkannter realer Objekte überlappen, so dass der Benutzer die Vielzahl realer Objekte wahrnimmt, die durch die Vielzahl virtueller Symbole angegeben werden;
Erkennen einer Vielzahl realer Objekte, die nacheinander von den Augen eines Benutzers beobachtet werden, der das Gerät trägt; und
Anzeigen der Vielzahl virtueller Symbole, die die Vielzahl realer Objekte darstellen, auf die der Benutzer nacheinander auf dem umgebenden Bild blickt, und zwar in der Reihenfolge, in der der Benutzer auf die Vielzahl realer Objekte geblickt hat;
Bestimmen, ob die erkannte Vielzahl realer Objekte einer Vielzahl von Objekten entspricht, die als Passwort voreingestellt sind;
basierend auf dem Bestimmen, dass die erkannte Vielzahl realer Objekte der Vielzahl von Objekten entspricht, die als Passwort voreingestellt sind, Ausführen einer voreingestellten Aufgabe, die der Vielzahl realer Objekte und einer Reihenfolge entspricht, in der die Vielzahl realer Objekte beobachtet wird.

12. Nicht flüchtiges, computerlesbares Aufzeichnungsmedium, auf dem ein Computerprogramm aufgezeichnet ist, das, wenn es von einem Computer ausgeführt wird, das Verfahren nach Anspruch 11 ausführt.

## Revendications

1. Dispositif (100) configuré pour fournir un service de réalité augmentée, AR, le dispositif (100) comprenant :
un affichage (111) ;
une caméra (161) ; et
un processeur (120) configuré pour :
commander la caméra (161) pour obtenir une image environnante de l'environnement du dispositif (100) ;
commander l'affichage (111) pour afficher l'image environnante obtenue ;
détecter une pluralité d'objets réels inclus dans l'image environnante obtenue ;
afficher une pluralité d'icônes virtuelles mappées sur la pluralité d'objets réels détectés dans l'image environnante et indiquant la pluralité d'objets réels détectés, chevauchant la pluralité d'objets réels détectés, de sorte que l'utilisateur observe la pluralité d'objets réels indiqués par la pluralité d'icônes virtuelles ;
reconnaître une pluralité d'objets réels observés séquentiellement par les yeux d'un utilisateur portant le dispositif ; et
afficher la pluralité d'icônes virtuelles représentant la pluralité d'objets réels regardés par l'utilisateur séquentiellement sur l'image environnante selon l'ordre dans lequel l'utilisateur a regardé la pluralité d'objets réels ;
déterminer si la pluralité reconnue d'objets réels correspondent à une pluralité d'objets prédéfinis comme mot de passe ;
sur la base de la détermination que la pluralité d'objets réels reconnus correspondent à la pluralité d'objets prédéfinis comme mot de passe, exécuter une tâche prédéfinie correspondant à la pluralité d'objets réels et à un ordre dans lequel la pluralité d'objets réels sont observés.

2. Dispositif (100) selon la revendication 1, dans lequel le processeur (120) est en outre configuré pour commander un affichage (111) pour chevaucher, sur l'image environnante, une image virtuelle représentant un objet observé par les yeux de l'utilisateur parmi la pluralité d'objets réels inclus dans l'image environnante, et afficher un résultat du chevauchement.

3. Dispositif (100) selon la revendication 1, dans lequel le processeur (120) est en outre configuré pour commander le dispositif (100) pour détecter un geste de la main de l'utilisateur et exécuter une tâche prédéfinie correspondant au geste de la main.

4. Dispositif (100) selon la revendication 1, dans lequel le processeur (120) est en outre configuré pour commander un affichage (111) pour chevaucher, sur l'image environnante, une image virtuelle liée à une entrée de mot de passe lorsqu'il est détecté que le dispositif est porté par l'utilisateur, et afficher un résultat du chevauchement.

5. Dispositif (100) selon la revendication 1, dans lequel le processeur (120) est en outre configuré pour commander un affichage (111) pour chevaucher, sur l'image environnante, une image virtuelle liée à une entrée de mot de passe lorsque l'image environnante du dispositif (100) obtenue via la caméra (161) correspond à une image pré-stockée, et afficher un résultat du chevauchement.

6. Dispositif (100) selon la revendication 1, dans lequel le processeur (120) est en outre configuré pour commander un affichage (111) pour chevaucher, sur l'image environnante, une image virtuelle liée à une entrée de mot de passe sur la base d'une entrée utilisateur prédéterminée, et afficher un résultat du chevauchement.

7. Dispositif (100) selon la revendication 1, dans lequel le processeur (120) est en outre configuré pour :
recevoir une entrée sélectionnant une tâche correspondant à un mot de passe ; et
stocker l'objet étant observé en tant que mot de passe correspondant à la tâche sélectionnée pendant que l'utilisateur observe, pendant une période de temps prédéterminée ou plus, un objet inclus dans l'image environnante.

8. Dispositif (100) selon la revendication 7, dans lequel le processeur (120) est configuré pour stocker, en tant que mot de passe, un ordre dans lequel un ou plusieurs objets sont observés lorsque l'utilisateur observe séquentiellement un ou plusieurs objets inclus dans l'image environnante.

9. Dispositif (100) selon la revendication 7, dans lequel le processeur (120) est configuré pour stocker un geste de la main de l'utilisateur en tant que mot de passe lorsque le geste de la main de l'utilisateur est détecté.

10. Dispositif (100) selon la revendication 1, dans lequel la tâche prédéfinie comporte au moins l'une des opérations suivantes : l'exécution d'une application et le déverrouillage du dispositif (100).

11. Procédé de fonctionnement d'un dispositif (100) configuré pour fournir un service de réalité augmentée, AR, le procédé comprenant :
l'obtention d'une image environnante de l'environnement du dispositif via une caméra (161) ;
l'affichage de l'image environnante obtenue ;
la détection d'une pluralité d'objets réels inclus dans l'image environnante obtenue ;
l'affichage d'une pluralité d'icônes virtuelles mappées sur la pluralité d'objets réels détectés dans l'image environnante et indiquant la pluralité d'objets réels détectés, chevauchant la pluralité d'objets réels détectés, de sorte que l'utilisateur observe la pluralité d'objets réels indiqués par la pluralité d'icônes virtuelles ;
la reconnaissance d'une pluralité d'objets réels observés séquentiellement par les yeux d'un utilisateur portant le dispositif ; et
l'affichage de la pluralité d'icônes virtuelles représentant la pluralité d'objets réels regardés par l'utilisateur séquentiellement sur l'image environnante selon l'ordre dans lequel l'utilisateur a regardé la pluralité d'objets réels ;
le fait de déterminer si la pluralité reconnue d'objets réels correspondent à une pluralité d'objets prédéfinis en tant que mot de passe ;
sur la base de la détermination que la pluralité d'objets réels reconnus correspondent à la pluralité d'objets prédéfinis en tant que mot de passe, l'exécution d'une tâche prédéfinie correspondant à la pluralité d'objets réels et à un ordre dans lequel la pluralité d'objets réels sont observés.

12. Support d'enregistrement non transitoire lisible par ordinateur sur lequel est enregistré un programme informatique qui, lorsqu'il est exécuté par un ordinateur, exécute le procédé selon la revendication 11.
